# EUROPÄISCHE PATENTSCHRIFT

(11) **EP 4 650 304 B1**
(45) Veröffentlichungstag und Bekanntmachung des Hinweises auf die Patenterteilung: **24.06.2026**
(21) Anmeldenummer: 25173167.5
(22) Anmeldetag: 29.04.2025
(51) Int. Cl.: B65G 1/137, B65G 1/133, G06Q 10/047, G06Q 10/063, G06Q 10/087

(54) **VERFAHREN ZUM KOMMISSIONIEREN MITTELS EINES FLURFÖRDERFAHRZEUGS MIT EINER DREHBAREN WARENAUFNAHMEVORRICHTUNG**
METHOD FOR COMMISSIONING BY MEANS OF AN INDUSTRIAL TRUCK WITH A ROTATABLE GOODS RECEIVING DEVICE
PROCÉDÉ DE PRÉPARATION DE COMMANDES AU MOYEN D'UN CHARIOT DE MANUTENTION DOTÉ D'UN DISPOSITIF DE RÉCEPTION DE MARCHANDISES ROTATIF

(30) Priorität: 15.05.2024 DE 102024113630
(43) Veröffentlichungstag der Anmeldung: 19.11.2025
(73) Patentinhaber: Safelog GmbH, 85570 Markt Schwaben (DE)
(72) Erfinder: Wolter, Michael, 83727 Schliersee (DE); Wolter, Christian, 85570 Markt Schwaben (DE)
(74) Vertreter: Grättinger Möhring von Poschinger Patentanwälte Partnerschaft mbB

(56) Entgegenhaltungen:
- EP-B1- 3 386 900
- WO-A1-2019/083199
- FR-A1- 3 048 238
- US-A1- 2023 286 749

## Beschreibung

Die vorliegende Erfindung betrifft ein Verfahren und ein System zum Kommissionieren von Waren mittels eines fahrerlosen Flurförderfahrzeugs.

Ein fahrerloses Flurförderfahrzeug ist dabei ein ebenerdig eingesetztes, flurgebundenes Fördermittel mit eigenem Fahrantrieb, das automatisch gesteuert und berührungslos geführt wird, um Güter oder Waren horizontal zu transportieren. Fahrerlose Flurförderfahrzeuge werden auch als "Fahrerlose Transportfahrzeuge" (FTS) oder "Automated Guided Vehicles" (AGV) bezeichnet.

Unter Kommissionieren wird das Zusammenstellen von auftragsspezifischen Teilmengen von Waren aus einer bereitgestellten Gesamtmenge von Waren verstanden.

Der Einsatz von fahrerlosen Flurförderfahrzeugen zum Kommissionieren von Waren ist aus dem Stand der Technik bekannt. Aus dem Fundus der vorbekannten Veröffentlichungen sei beispielhaft das Dokument WO 2018 064 639 A1 genannt, in dem ein System zu Kommissionieren von Waren beschrieben wird, bei dem ein menschlicher Kommissionierer (eine Person, die Waren kommissioniert) durch ein fahrerloses Flurförderfahrzeug unterstützt wird. Der Kommissionierer befindet sich dabei in einem Kommissionier-Bereich, der von mehreren Regalen begrenzt wird, in denen sich die zu kommissionierenden Waren befinden.

Das Dokument AT 17770 U1 beschreibt ein Lager- und Kommissioniersystem sowie Kommissionierverfahren für einen verbesserten Warentransfer zwischen zwei Lagerbereichen. Im Dokument WO 2017 214652 A1 wird ein Kommissioniersystem mit einem Transportroboter zum Unterfahren von Einzelregalen und Transportwagen offenbart. Das Dokument EP 2 102 080 A1 beschreibt ein autarkes Transportfahrzeug, das in einem Verfahren zum Kommissionieren von Waren verwendet wird.

US 2023/286749 A1 offenbart ein Verfahren gemäß dem Oberbegriff des Anspruchs 1 und ein Kommissioniersystem gemäß dem Oberbegriff des Anspruchs 4.

Ein fahrerloses Transportfahrzeug (FTS) transportiert einen FTS-Wagen mit regalartigen Ablagemöglichkeiten für Kartons und positioniert diesen in der Nähe des Kommissionierers. Der Kommissionierer entnimmt die zu kommissionierenden Waren aus den Regalen des Kommissionier-Bereichs und legt diese nach Aufträgen sortiert in die Kartons auf dem FTS-Wagen ab. Nachdem der FTS-Wagen durch den Kommissionierer vollständig kommissioniert bzw. beladen wurde, wird dieser durch das fahrerlose Transportfahrzeug (FTS) zur weiteren Bearbeitung in einen anderen Bereich transportiert.

Der vorliegenden Erfindung liegt die Aufgabe zugrunde, ein Verfahren sowie ein zugehöriges System zum Kommissionieren von Waren mittels eines fahrerlosen Flurförderfahrzeugs bereitzustellen, das sich durch eine verbesserte Praxistauglichkeit auszeichnet, insbesondere im Hinblick auf die Fehlerquote und den Zeitbedarf des Kommissioniervorgangs sowie die vom Kommissionierer zurückzulegenden Wege.

Gelöst wird diese Aufgabe durch das erfindungsgemäße Verfahren zum Kommissionieren von unterschiedlichen Aufträgen zugeordneten Waren unter Verwendung eines ersten Kommissioniersystems gemäß Anspruch 1, das erfindungsgemäße Kommissioniersystem gemäß Anspruch 4 und das erfindungsgemäße Computerprogrammprodukt gemäß Anspruch 12.

Das erfindungsgemäße Verfahren gemäß Anspruch 1 zum Kommissionieren von unterschiedlichen Aufträgen zugeordneten Waren unter Verwendung eines ersten Kommissioniersystems, umfassend ein erstes fahrerloses Flurförderfahrzeug und eine drehbar auf dem ersten Flurförderfahrzeug gelagerte erste Warenaufnahmevorrichtung zur Aufnahme von Waren in den unterschiedlichen Aufträgen zugewiesenen auftragsspezifischen Warensektoren, wobei eine erste Ware einem ersten Auftrag zugeordnet ist und eine zweite Ware einem zweiten Auftrag zugeordnet ist, umfasst die folgenden Schritte:
A1) Bereitstellen der zu kommissionierenden, dem ersten Auftrag zugeordneten ersten Ware an einer ersten Übergabeposition,
B1) Aufnehmen der zu kommissionierenden ersten Ware an der ersten Übergabeposition durch einen Kommissionierer,
C1) Positionieren des ersten fahrerlosen Flurförderfahrzeugs mitsamt des ersten Kommissioniersystems in der Nähe des Kommissionierers,
D1) Verdrehen der ersten Warenaufnahmevorrichtung gegenüber dem ersten Flurförderfahrzeug dergestalt, dass ein dem ersten Auftrag zugewiesener erster Warensektor der ersten Warenaufnahmevorrichtung dem Kommissionierer zugewandt ist,
E1) Ablegen der zu kommissionierenden ersten Ware im ersten Warensektor der ersten Warenaufnahmevorrichtung durch den Kommissionierer,
A2) Bereitstellen der zu kommissionierenden, dem zweiten Auftrag zugeordneten zweiten Ware an einer zweiten Übergabeposition,
B2) Aufnehmen der zu kommissionierenden zweiten Ware an der zweiten Übergabeposition durch den Kommissionierer,
C2) Positionieren des ersten fahrerlosen Flurförderfahrzeugs mitsamt des ersten Kommissioniersystems in der Nähe des Kommissionierers,
D2) Verdrehen der ersten Warenaufnahmevorrichtung gegenüber dem ersten Flurförderfahrzeug dergestalt, dass ein dem zweiten Auftrag zugewiesener zweiter Warensektor der ersten Warenaufnahmevorrichtung dem Kommissionierer zugewandt ist, und
E2) Ablegen der zu kommissionierenden zweiten Ware im zweiten Warensektor der ersten Warenaufnahmevorrichtung durch den Kommissionierer.

Das erfindungsgemäße Verfahren basiert dabei auf dem Einsatz eines Kommissioniersystems, welches ein fahrerloses Flurförderfahrzeug und eine auf dem Flurförderfahrzeug drehbar gelagerte Warenaufnahmevorrichtung mit auftragsspezifischen Warensektoren zur Aufnahme von Waren aufweist.

Der Erfindung liegt dabei die Erkenntnis zugrunde, dass dadurch, dass die Warenaufnahmevorrichtung so gedreht wird, dass der für den aktuellen Auftrag relevante Warensektor dem Kommissionierer zugewandt ist, die Laufwege des Kommissionierers und somit der Zeitaufwand beim Kommissionieren erheblich reduziert werden können.

Darüber hinaus kann auch die Fehlerquote beim Kommissionieren (d.h. der Anteil der Waren, die nicht dem richtigen Auftrag zugeordnet werden) verringert werden, da durch das auftragsspezifische Drehen der Warenaufnahmevorrichtung die Gefahr eines "Danebengreifens" durch den Kommissionierer reduziert werden kann.

Die erste und die zweite Ware können dabei auch an ein und derselben Übergabeposition bereitgestellt werden. In diesem Fall stimmen die erste und die zweite Übergabeposition miteinander überein.

Weiterhin kann es sich bei dem ersten und dem zweiten Auftrag um ein und denselben Auftrag oder um verschiedene Aufträge handeln. Im erstgenannten Fall (erster und zweiter Auftrag sind identisch) werden die erste und die zweite Ware in einem gemeinsamen, diesem Auftrag zugewiesenen Warensektor im ersten Kommissioniersystem abgelegt. Handelt es sich hingegen um unterschiedliche Aufträge, werden die erste und die zweite Ware in unterschiedlichen Warensektoren des ersten Kommissioniersystems abgelegt.

Beim Kommissionierer kann es sich um einen Menschen oder einen Roboter handeln.

Gemäß einer bevorzugten Ausführungsform der Erfindung erfolgt das Bereitstellen der zu kommissionierenden Ware an einer Übergabeposition gemäß Schritt A1 und optional Schritt A2 unter Verwendung eines zweiten Kommissioniersystems mit den folgenden Schritten, wobei das zweite Kommissioniersystem ein zweites fahrerloses Flurförderfahrzeug und eine drehbar auf dem zweiten Flurförderfahrzeug gelagerte zweite Warenaufnahmevorrichtung zum Bereitstellen von Waren in einer Vielzahl von Warensektoren aufweist:
A11) Bereitstellen der zu kommissionierenden ersten Ware in einem ersten Warensektoren der zweiten Warenaufnahmevorrichtung und definieren dieses ersten Warensektors als die erste Übergabeposition,
A12) Positionieren des zweiten Flurförderfahrzeugs in der Nähe des Kommissionierers,
A13) Verdrehen der zweiten Warenaufnahmevorrichtung gegenüber dem zweiten Flurförderfahrzeug dergestalt, dass der erste Warensektor der zweiten Warenaufnahmevorrichtung dem Kommissionierer zugewandt ist,
   und optional anschließend
A21) Bereitstellen der zu kommissionierenden zweiten Ware in einem zweiten Warensektoren der zweiten Warenaufnahmevorrichtung und definieren dieses zweiten Warensektors als die zweite Übergabeposition,
A22) Positionieren des zweiten Flurförderfahrzeugs in der Nähe des Kommissionierers,
A23) Verdrehen der zweiten Warenaufnahmevorrichtung gegenüber dem zweiten Flurförderfahrzeug dergestalt, dass der zweite Warensektor der zweiten Warenaufnahmevorrichtung dem Kommissionierer zugewandt ist.

Dieser bevorzugten Ausführungsform liegt die Erkenntnis zugrunde, dass sich die Effizienz des Kommissioniervorgangs noch weiter verbessern lässt, wenn ein weiteres, zweites Kommissioniersystem (mit einem zweiten fahrerlosen Flurförderfahrzeug und einer auf dem zweiten Flurförderfahrzeug drehbar gelagerten zweiten Warenaufnahmevorrichtung mit Warensektoren zum Bereitstellen von Waren) verwendet wird, um die vom Kommissionierer zu greifenden Waren an den Übergabepositionen bereitzustellen.

Dabei wird die zweite Warenaufnahmevorrichtung des zweiten Kommissioniersystems so gedreht, dass der Warensektor dem Kommissionierer zugewandt ist, in dem sich die vom Kommissionierer als nächste zu greifende Ware befindet. Auf diese Weise können die Laufwege des Kommissionierers und somit der Zeitaufwand beim Kommissionieren weiter verkürzt werden.

Denkbar ist dabei auch, dass die erste und die zweite Ware nicht beide gemeinsam im zweiten Kommissioniersystem bereitgestellt werden, sondern in unterschiedlichen Kommissioniersystemen.

Weiterhin kann in vorteilhafter Weise
- gemäß Schritt C1 und/oder C2 das Positionieren des ersten fahrerlosen Flurförderfahrzeugs in der Nähe des Kommissionierers erfolgen, indem das erste Flurförderfahrzeug dem Kommissionierer in einem vorgebbaren ersten Abstand folgt oder indem das erste Flurförderfahrzeug in einem ersten Kommissionierbereich positioniert ist, und/oder
- gemäß Schritt A12 und/oder A22 das Positionieren des zweiten Flurförderfahrzeugs in der Nähe des Kommissionierers erfolgen, indem das zweite Flurförderfahrzeug dem Kommissionierer in einem vorgebbaren zweiten Abstand folgt oder indem das zweite Flurförderfahrzeug in einem zweiten Kommissionierbereich positioniert ist.

Die Erfindung manifestiert sich weiterhin in dem Kommissioniersystem gemäß Anspruch 4. Das Kommissioniersystem umfasst ein fahrerloses Flurförderfahrzeug und eine drehbar auf dem Flurförderfahrzeug gelagerte Warenaufnahmevorrichtung zur Aufnahme und/oder Bereitstellung von Waren in einer Vielzahl von Warensektoren. Das Flurförderfahrzeug umfasst einen Computer mit einer Prozessoreinheit und einer Speichereinheit. Die Prozessoreinheit ist dazu geeignet, Rechenoperationen auszuführen und insbesondere als CPU, GPU oder dergleichen mit einem oder mehreren Prozessorkernen ausgeführt. Die Prozessoreinheit ist dazu eingerichtet, durch Ansteuern von geeigneten Aktuatoren des Flurförderfahrzeugs das Flurförderfahrzeug zu positionieren und die Warenaufnahmevorrichtung gegenüber dem Flurförderfahrzeug zu verdrehen. Die Speichereinheit ist dazu geeignet, Daten zu speichern und an die Prozessoreinheit auszugeben und insbesondere als flüchtiger oder nichtflüchtiger Speicher ausgebildet. Das Kommissioniersystem ist eingerichtet zur Verwendung im erfindungsgemäßen Verfahren.

In vorteilhafter Weise weist das Flurförderfahrzeug einen (gegenüber dem Flurförderfahrzeug) drehbaren Drehteller auf, auf dem die Warenaufnahmevorrichtung angeordnet ist.

Insbesondere, wenn es sich bei den zu kommissionierenden Waren um Bekleidung handelt, ist es weiterhin vorteilhaft, wenn die Warenaufnahmevorrichtung eine umlaufende Einhängevorrichtung aufweist, die insbesondere als Kleiderstange.

Dabei ist es besonders vorteilhaft, wenn die die umlaufende Einhängevorrichtung kreisförmig, elliptisch oder vieleckig ausgeführt ist.

Damit kann auf einfache Weise eine mehrseitige Zugänglichkeit der Warenaufnahmevorrichtung realisiert werden.

Benachbarte Warensektoren können insbesondere durch einen Flansch oder einen aus der Einhängevorrichtung bzw. der Kleiderstange nach oben hin überstehenden Stift voneinander abgetrennt sein, um ein Verrutschen von Waren aus einem Warensektor in den benachbarten Warensektor zu verhindern. Der Flansch bzw. der Stift kann dabei lösbar befestigt sein, insbesondere an eigens dafür vorgesehenen Rastungen der Einhängevorrichtung. Auf diese Weise kann die Anzahl und die Größe der Warensektoren variabel angepasst werden.

Alternativ kann es für andere Warenarten vorteilhaft sein, wenn die Warenaufnahmevorrichtung ein mehrseitig zugängliches Ablageregal aufweist.

Die Effizienz des Kommissionierens lässt sich noch weiter erhöhen, wenn die Warensektoren der Warenaufnahmevorrichtung mittels einer Put-by-light-Vorrichtung und/oder einer Pick-by-light-Vorrichtung jeweils durch ein Lichtsignal (Markierung) markierbar sind.

Ein unbeabsichtigtes Verschieben von Waren von einem Warensektor in einen benachbarten Warensektor kann verhindert oder zumindest erschwert werden, wenn die Warensektoren der Warenaufnahmevorrichtung durch Warentrenner voneinander abgetrennt sind.

Ein Warentrenner kann dabei insbesondere durch eine konstruktive Maßnahme, wie beispielsweise eine Trennwand, realisiert sein.

Gemäß einer weiterhin bevorzugten Ausführungsform der Erfindung ist das Flurförderfahrzeug als ein autonomes Flurförderfahrzeug ausgeführt.

Die Erfindung manifestiert sich weiterhin in einem Computerprogrammprodukt, umfassend Befehle, die bewirken, dass das fahrerlose Flurförderfahrzeug eines Kommissioniersystem gemäß einem der Ansprüche 4 bis 11
- die Verfahrensschritte C1 und D1 und C2 und D2 nach Anspruch 1, und/oder
- die Verfahrensschritte A12 und A13 und optional die Verfahrensschritte A22 und A23 nach Anspruch 2 ausführt.

Das Flurförderfahrzeug umfasst hierzu einen Computer mit einer Prozessoreinheit und einer Speichereinheit. Der Computer kann insbesondere als Ein-Platinen-Computer, Embedded System, digitales Endgerät, Desktop-Computer, Edge Device oder Server ausgeführt sein kann. Die Prozessoreinheit ist zur Ausführung von Rechenoperationen geeignet und kann als CPU, GPU oder dergleichen mit einem oder mehreren Prozessorkernen ausgeführt sein. Ferner kann die Prozessoreinheit durch Ansteuern von geeigneten Aktuatoren des Flurförderfahrzeugs das Flurförderfahrzeug positionieren und die Warenaufnahmevorrichtung gegenüber dem Flurförderfahrzeug verdrehen. Die Speichereinheit ist dazu geeignet, Daten zu speichern und (an die Prozessoreinheit) auszugeben und kann als flüchtiger oder nichtflüchtiger Speicher ausgebildet sein.

Nachfolgend werden Ausführungsbeispiele der Erfindung anhand der Zeichnung näher erläutert. Dabei zeigt
- Fig. 1A & 1B: jeweils eine schematische Darstellung eines erfindungsgemäßen Kommissioniersystems in einer Seitenansicht (Figur 1A) und in einer Draufsicht (Figur 1B),
- Fig. 2: eine schematische Darstellung zweier erfindungsgemäßer Kommissioniersysteme,
- Fig. 3A - 3D: die beiden Kommissioniersysteme gemäß Figur 2 zu verschiedenen Zeitpunkten während der Durchführung des erfindungsgemäßen Verfahrens,
- Fig. 4A - 4D: mehrere Kommissioniersysteme zu verschiedenen Zeitpunkten während der Durchführung des erfindungsgemäßen Verfahrens,
- Fig. 5A - 5B: mehrere Kommissioniersysteme zu verschiedenen Zeitpunkten während der Durchführung des erfindungsgemäßen Verfahrens, und
- Fig. 6 & 7: Prozessflussdiagramme für erfindungsgemäße Verfahren zum Kommissionieren.

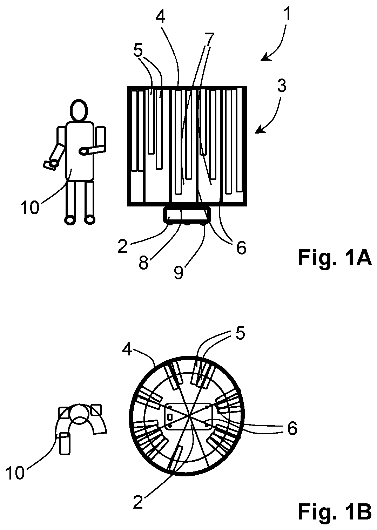

Die Figuren 1A und 1B zeigen jeweils eine schematische Darstellung eines erfindungsgemäßen Kommissioniersystems 1 in einer Seitenansicht (Figur 1A) bzw. in einer Draufsicht (Figur 1B).

Das Kommissioniersystem 1 umfasst ein fahrerloses Flurförderfahrzeug 2 und eine auf dem Flurförderfahrzeug 2 drehbar gelagerte Warenaufnahmevorrichtung 3. Die Warenaufnahmevorrichtung 3 weist dabei eine kreisförmig umlaufende Kleiderstange 4 auf, an der auf Kleiderbügeln aufgehängte Kleidungsstücke (Waren 5) eingehängt werden können.

Die Kleiderstange 4 (und somit auch die Warenaufnahmevorrichtung 3) ist durch Trennwände 6, die als Warentrenner fungieren, in mehrere Warensektoren 7 unterteilt. In den Warensektoren 7 können die auf Kleiderbügeln aufgehängte Kleidungsstücke (Waren 5) aufgenommen und bereitgestellt werden. Die Warenaufnahmevorrichtung 3 ist von allen Seiten her zugänglich und damit mehrseitig zugänglich.

Die Warenaufnahmevorrichtung 3 ist auf einem Drehteller 8 des Flurförderfahrzeugs 2 angeordnet, der durch einen Aktuator (nicht dargestellt) gegenüber dem restlichen Flurförderfahrzeug 2 verdreht werden kann. Das Flurförderfahrzeug 2 weist ferner von Aktuatoren angetriebene Räder 9 auf, mittels der es verfahren und positioniert werden kann.

Neben dem Kommissioniersystem 1 befindet sich ein menschlicher Kommissionierer 10, der die auf Kleiderbügeln aufgehängte Kleidungsstücke (Waren 5) in den Warensektoren 7 ablegen und dort bereitgestellte Waren 5 entnehmen kann.

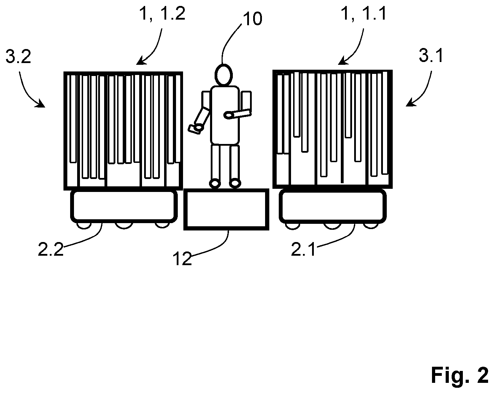

Figur 2 zeigt schematisch zwei weitere erfindungsgemäße Kommissioniersysteme 1. Gleichartige Komponenten sind mit den gleichen Bezugszeichen bezeichnet wie in Figur 1. Um Wiederholungen zu vermeiden, wird im Folgenden nur auf die wesentlichen Unterschiede zu Figur 1 eingegangen.

Im ersten Kommissioniersystem 1.1 werden dabei die den unterschiedlichen Aufträgen zugeordneten Waren 5 durch den Kommissionierer 10 in den auftragsspezifischen Warensektoren 7 abgelegt.

Im zweiten Kommissioniersystem 1.2 werden die zu kommissionierenden Waren 5 in den Warensektoren 7 an Übergabepositionen 11 bereitgestellt.

Der menschliche Kommissionierer 10 steht auf einem erhöhten Podest 12, um ihm den Zugriff auf die in den Warenaufnahmevorrichtungen 3 befindlichen Waren 5 zu erleichtern.

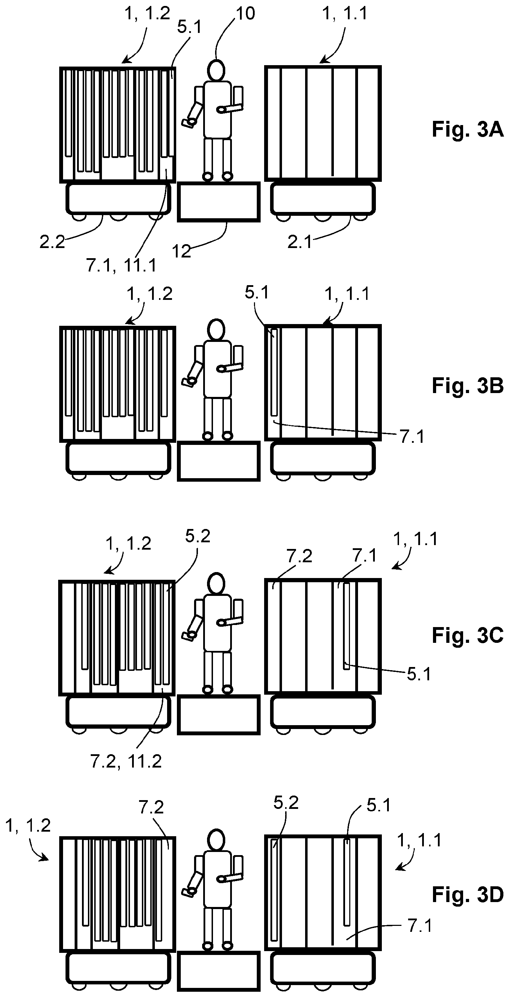

Eine Ausführungsform des erfindungsgemäßen Verfahrens zum Kommissionieren 100 soll im Folgenden unter besonderer Bezugnahme auf die Figuren 3A bis 3D sowie die Figuren 6 und 7 näher erläutert werden.

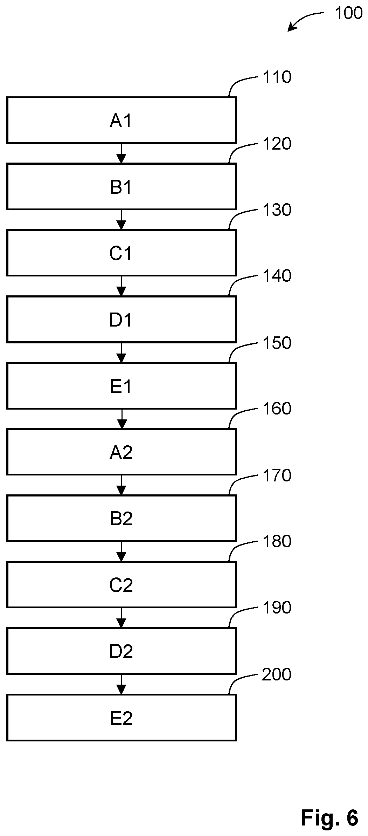

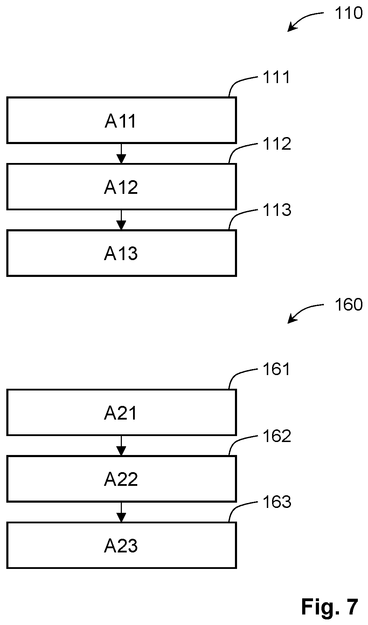

Die Figuren 3A bis 3D zeigen dabei die beiden Kommissioniersysteme 1 gemäß Figur 2 zu verschiedenen Zeitpunkten während der Durchführung des erfindungsgemäßen Verfahrens, die Figuren 6 und 7 zeigen Prozessflussdiagramme des erfindungsgemäßen Kommissionierverfahrens 100.

Zunächst wird gemäß Schritt A1 (110) eine erste Ware 5.1, die einem ersten Auftrag zugeordnet ist, an einer ersten Übergabeposition 11.1 durch das zweite Kommissioniersystem 1.2 bereitgestellt. Die erste Ware befindet sich dabei gemäß Verfahrensschritt A1 (111) in einem ersten Warensektor 7.1 des zweiten Kommissioniersystems 1.2. Dieser erste Warensektor 7.1 wird als erste Übergabeposition 11.1 definiert.

Das zweite Kommissioniersystem 1.2 ist dabei bereits gemäß Schritt A12 (112) in der Nähe des Kommissionierers 10 positioniert. Weiterhin wird gemäß Schritt A13 (113) die zweite Warenaufnahmevorrichtung 3.2 gegenüber dem zweiten Flurförderfahrzeug 2.2 derart gedreht (verdreht), dass der erste Warensektor 7.1 (in dem sich die erste Ware 5.1 befindet) dem Kommissionierer 10 zugewandt ist. Diese Situation ist in Figur 3A dargestellt.

Anschließend entnimmt der Kommissionierer 10 gemäß Schritt B1 (120) die erste Ware 5.1 an der ersten Übergabeposition 11. aus dem zweiten Kommissioniersystem 1.2.

Das erste Kommissioniersystem 1.1 ist zu diesem Zeitpunkt bereits gemäß Schritt C1 (130) in der Nähe des Kommissionierers 10 positioniert.

Anschließend wird gemäß Schritt D1 (140) die erste Warenaufnahmevorrichtung 3.1 des ersten Flurförderfahrzeugs 2.1 gegenüber dem ersten Flurförderfahrzeug 2.1 derart gedreht, dass ein dem ersten Auftrag zugewiesener erster Warensektor 7.1 der ersten Warenaufnahmevorrichtung 3.1 dem Kommissionierer 10 zugewandt ist.

Daraufhin legt der Kommissionierer 10 gemäß Schritt E1 (150) die erste Ware 5.1 im ersten Warensektor 7.1 der ersten Warenaufnahmevorrichtung 3.1 ab. Figur 3B zeigt die im ersten Warensektor 7.1 der ersten Warenaufnahmevorrichtung 3.1 abgelegte erste Ware 5.1.

Im nächsten Schritt A2 (160) wird nun eine einem zweiten Auftrag zugeordnete zweite Ware 5.2 an einer zweiten Übergabeposition 11.2 durch das zweite Kommissioniersystem 1.2 bereitgestellt. Bei dem ersten und dem zweiten Auftrag handelt es sich dabei um zwei unterschiedliche Aufträge.

Die zweite Ware 5.2 befindet sich in einem zweiten Warensektor 7.2 der zweiten Warenaufnahmevorrichtung 3.2. Dieser zweite Warensektor 7.2 wird gemäß Schritt A21 (161) als zweite Übergabeposition 11.2 definiert.

Das zweite Flurförderfahrzeug 2.2 verändert seine Position nicht und ist bereits gemäß Schritt A22 (162) in der Nähe des Kommissionierers 10 positioniert.

Die zweite Warenaufnahmevorrichtung 3.2 wird gemäß Schritt A23 (163) gegenüber dem zweiten Flurförderfahrzeug 2.2 so gedreht, dass der zweite Warensektor 7.2 der zweiten Warenaufnahmevorrichtung 3.2 (in dem sich die zweite Ware 5.2 befindet) dem Kommissionierer 10 zugewandt ist. Diese Situation ist in Figur 3C dargestellt.

Nun entnimmt der Kommissionierer gemäß Schritt B2 (170) die zweite Ware 5.2 aus dem zweiten Übergabesektor 7.2 (zweite Übergabeposition 11.2) aus der zweiten Warenaufnahmevorrichtung 3.2.

In der Zwischenzeit wurde die erste Warenaufnahmevorrichtung 3.1 des ersten Flurförderfahrzeugs 2.1 gemäß Schritt C2 (180) in der Nähe des Kommissionierers 10 positioniert und gemäß Schritt D2 (190) so gedreht, dass ein dem zweiten Auftrag zugewiesener zweiter Warensektor 7.2 der ersten Warenaufnahmevorrichtung 3.1 dem Kommissionierer 10 zugewandt ist (vgl. Figur 3C).

Anschließend legt der Kommissionierer 10 gemäß Schritt E2 (200) die zweite Ware 5.2, die dem zweiten Auftrag zugewiesen ist, in den zweiten Warensektor 7.2 der ersten Warenaufnahmevorrichtung 3.2 ab.

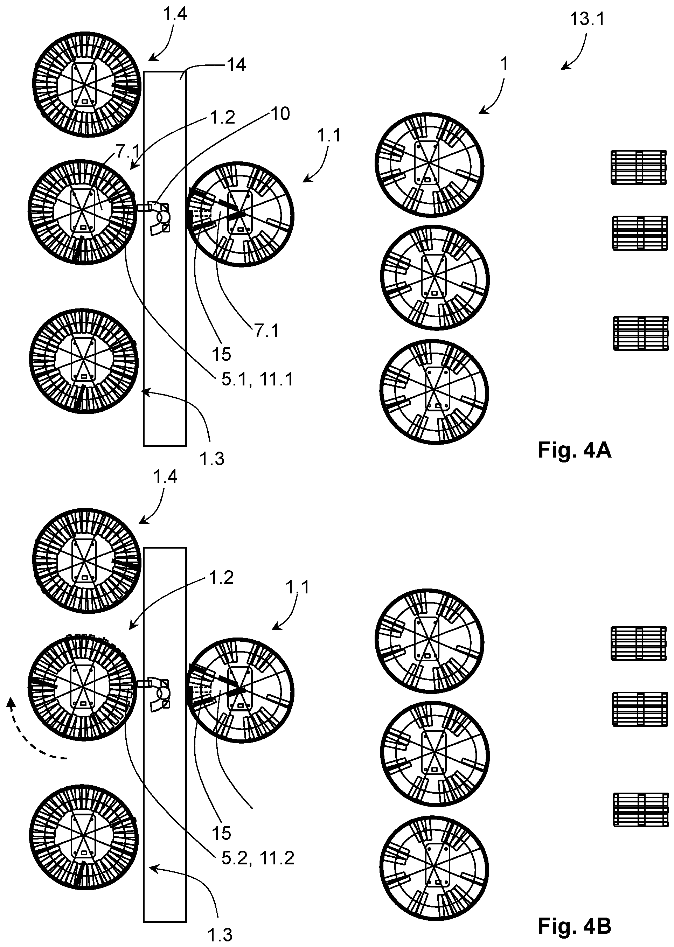

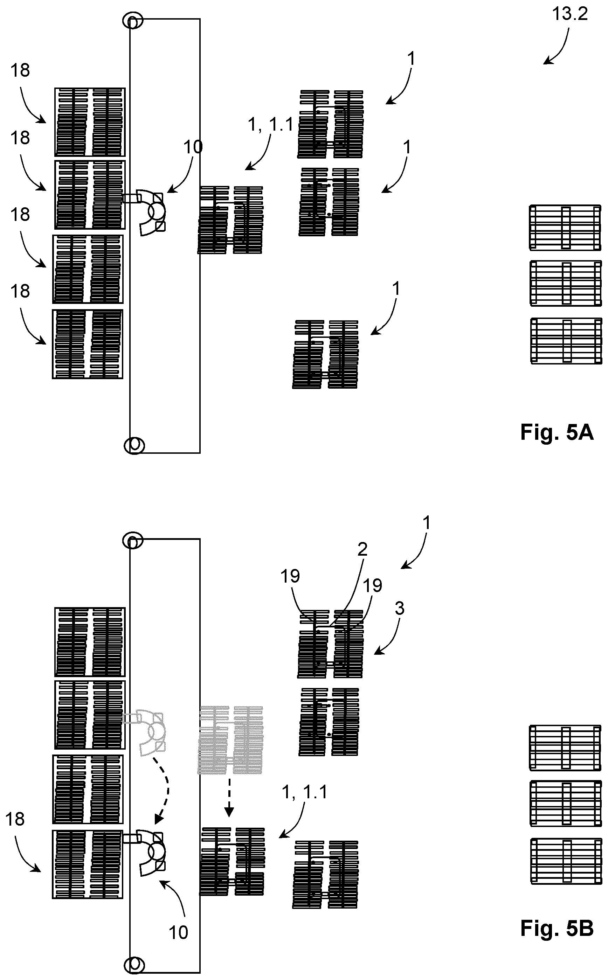

In den Figuren 4A bis 4D sowie 5A bis 5B sind jeweils beispielhaft mehrere Kommissioniersysteme 1 zu verschiedenen Zeitpunkten während der Durchführung eines erfindungsgemäßen Kommissionierverfahrens 100 schematisch in einer Draufsicht dargestellt.

Zur Vermeidung von Wiederholungen wird im Folgenden nur auf ausgewählte Aspekte der jeweiligen Ausführungsform eingegangen.

Die Figuren 4A bis 4D zeigen eine erste Kommissionier-Anordnung 13.1 mit insgesamt sieben erfindungsgemäßen Kommissioniersystemen 1. Drei Kommissioniersysteme 1.2 bis 1.4 dienen dabei der Bereitstellung von zu kommissionierenden Waren 5. Der Kommissionierer 10 bewegt sich in einem Laufbereich 14 und entnimmt im Zuge des Kommissioniervorgangs die zu kommissionierenden Waren 5 aus diesen drei Kommissioniersystemen 1.2 bis 1.4. In den vier anderen Kommissioniersystemen 1 legt der Kommissionierer 10 die zuvor aufgenommenen, zu kommissionierenden Waren 5 ab.

Gemäß Figur 4A wurde das zweite Kommissioniersystem 1.2 so positioniert und gedreht, dass ein erster Warensektor 7.1 mit einer ersten Ware 5.1, die einem ersten Auftrag zugewiesen ist, dem Kommissionierer 10 zugewandt ist und die erste Ware 5.1 damit in (an) der ersten Übergabeposition 11.1 bereitgestellt wird.

Der Kommissionierer 10 entnimmt die erste Ware 5.1, dreht sich um und legt die erste Ware 5.1 in dem ersten Warensektor 7.1 des ersten Kommissioniersystems 1.1 ab.

Dieser erste Warensektor 7.1 des ersten Kommissioniersystems 1.1 ist dem ersten Auftrag zugewiesen. Die erste Warenaufnahmevorrichtung 3.1 des ersten Kommissioniersystems 1.1 wurde zuvor so positioniert und verdreht, dass der erste Warensektor 7.1 dem Kommissionierer 10 zugewandt ist. Mittels einer Put-by-light-Vorrichtung wird der erste Warensektor mit einer Markierung 15 versehen.

Anschließend wird, wie in Figur 4B dargestellt, die zweite Ware 5.2 an der zweiten Übergabeposition 11.2 bereitgestellt. Hierzu wird die zweite Warenaufnahmevorrichtung 3.2 derart gedreht, dass ein zweiter Warensektor 7.2 der zweiten Warenaufnahmevorrichtung 3.2 dem Kommissionierer 10 zugewandt ist. Anschließend entnimmt der Kommissionierer 10 die zweite Ware 5.2 dem zweiten Kommissioniersystem 1.2.

Die zweite Ware 5.2 ist dabei einem zweiten Auftrag zugewiesen, der identisch mit dem ersten Auftrag ist. Die zweite Ware 5.2 wird daher vom Kommissionierer 10 in denselben Warensektor des ersten Kommissioniersystems 1.1 abgelegt wie die erste Ware 5.1.

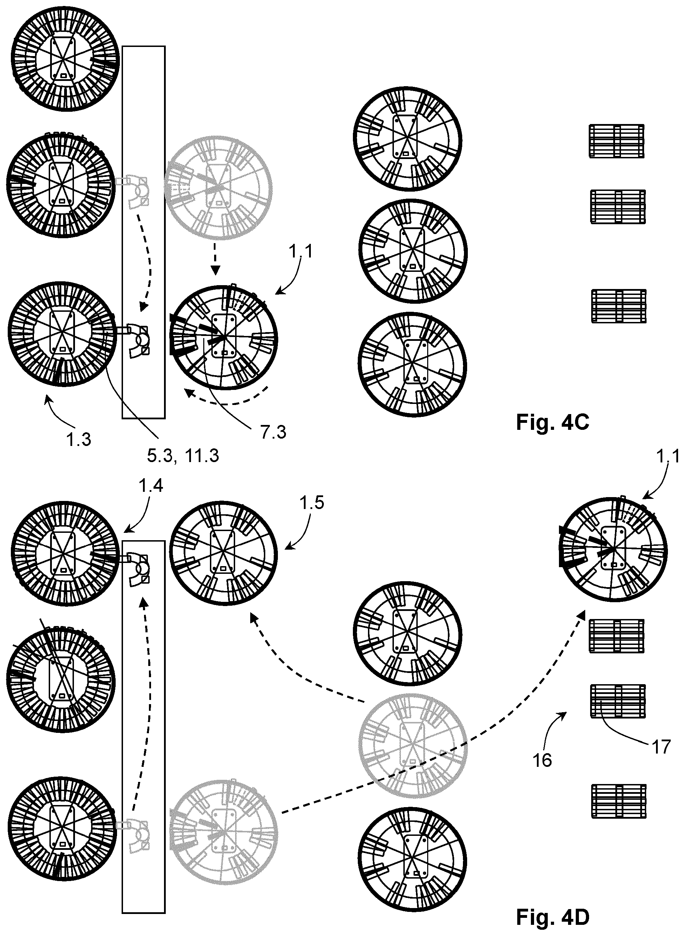

Anschließend bewegt sich der Kommissionierer 10 gemäß Figur 4C vom zweiten Kommissioniersystem 1.2 zum dritten Kommissioniersystem 1.3. Hier nimmt er eine dritte Ware 5.3 auf, die einem dritten Auftrag zugewiesen ist und ihm auf einer dritten Übergabeposition 11.3 bereitgestellt wurde. Hierfür wurde die Warenaufnahmevorrichtung 3 des dritten Kommissioniersystems 1.3 derart gedreht, dass der Warensektor 7, in dem sich die dritte Ware 5.3 befindet, dem Kommissionierer 10 zugewandt ist.

Der dritte Auftrag unterscheidet sich dabei von dem ersten und dem zweiten Auftrag.

Das erste Kommissioniersystem 1.1 folgt dem Kommissionierer 10 und wird in dessen Nähe positioniert. Weiterhin wird die erste Warenaufnahmevorrichtung 3.1 des ersten Kommissioniersystems 1.1 so gedreht, dass ein dritter Warensektor 7.3, der dem dritten Auftrag zugewiesen ist, dem Kommissionierer 10 zugewandt ist. Daraufhin legt der Kommissionierer 10 die dritte Ware 5.3 im dritten Warensektor 7.3 der ersten Kommissioniervorrichtung 1.1 ab.

Wenn die erste Warenaufnahmevorrichtung 3.1 des ersten Kommissioniersystems 1.1 vollständig mit Waren 5 bestückt und somit vollständig kommissioniert ist, wird das erste Kommissioniersystem 1.1, wie in Figur 4D dargestellt, in einen Verpackungsbereich 16 gefahren, in dem die kommissionierten Waren 5 für den Versand weiterverarbeitet und auf Paletten 17 verladen werden.

Der Kommissionierer 10 bewegt sich zum vierten Kommissioniersystem 1.4, um dort mit dem Kommissionieren fortzufahren. Ein fünftes Kommissioniersystem 1.5 wird in seiner Nähe positioniert, um die Rolle des ersten Kommissioniersystems 1.1 zu übernehmen und die zu kommissionierenden Waren 5 aufzunehmen.

Die Figuren 5A und 5B zeigen jeweils eine zweite Kommissionier-Anordnung 13.2 mit insgesamt vier erfindungsgemäßen Kommissioniersystemen 1.

Ein wesentlicher Unterschied zur ersten Kommissionier-Anordnung gemäß den Figuren 4A bis 4D besteht darin, dass die zu kommissionierenden Waren 5 nicht in erfindungsgemäßen Kommissioniersystemen bereitgestellt werden, sondern in Warenbereitstellungsvorrichtungen 18, die nicht mit Hilfe eines fahrerlosen Flurförderfahrzeugs verfahren und gedreht werden können. Das erste erfindungsgemäße Kommissioniersystem 1.1 folgt dem Kommissionierer 10, der sich während des Kommissioniervorgangs zu den einzelnen Warenbereitstellungsvorrichtungen 18 bewegt und dort die zu kommissionierenden Waren entnimmt.

Ein weiterer Unterschied besteht darin, dass die gegenüber dem Flurförderfahrzeug verdrehbaren Warenaufnahmevorrichtungen 3 der Kommissioniersysteme 1 gemäß den Figuren 5A und 5B jeweils zwei parallel zueinander verlaufende, gerade Kleiderstangen 19 aufweisen - und nicht eine umlaufende, kreisförmige Kleiderstange.

**Bezugszeichen**

| | |
|---|---|
| Kommissioniersystem | 1, 1.1, 1.2 |
| Flurförderfahrzeug | 2, 2.1, 2.2 |
| Warenaufnahmevorrichtung | 3, 3.1, 3.2 |
| Kleiderstange | 4 |
| Waren | 5, 5.1, 5.2, 5.3 |
| Trennwände | 6 |
| Warensektoren | 7, 7.1, 7.2 |
| Drehteller | 8 |
| Räder | 9 |
| Kommissionierer | 10 |
| Übergabepositionen | 11, 11.1, 11.2 |
| Podest | 12 |
| Kommissionier-Anordnung | 13.1 |
| Laufbereich | 14 |
| Markierung | 15 |
| Verpackungsbereich | 16 |
| Paletten | 17 |
| Warenbereitstellungsvorrichtungen | 18 |
| gerade Kleiderstange | 19 |

## Patentansprüche

1. Verfahren (100) zum Kommissionieren von unterschiedlichen Aufträgen zugeordneten Waren (5, 5.1, 5.2, 5.3) unter Verwendung eines ersten Kommissioniersystems (1.1) umfassend ein erstes fahrerloses Flurförderfahrzeug (2.1) und eine drehbar auf dem ersten Flurförderfahrzeug (2.1) gelagerte erste Warenaufnahmevorrichtung (3.1) zur Aufnahme von Waren (5, 5.1, 5.2, 5.3) in den unterschiedlichen Aufträgen zugewiesenen auftragsspezifischen Warensektoren (7, 7.1, 7.2), wobei
- eine erste Ware (5.1) einem ersten Auftrag zugeordnet ist und
- eine zweite Ware (5.2) einem zweiten Auftrag zugeordnet ist,
mit den folgenden Schritten:
A1) Bereitstellen (110) der zu kommissionierenden, dem ersten Auftrag zugeordneten ersten Ware (5.1) an einer ersten Übergabeposition (11.1),
B1) Aufnehmen (120) der zu kommissionierenden ersten Ware (5.1) an der ersten Übergabeposition (11.1) durch einen Kommissionierer (10),
C1) Positionieren (130) des ersten fahrerlosen Flurförderfahrzeugs (2.1) mitsamt des ersten Kommissioniersystems (1.1) in der Nähe des Kommissionierers (10), und wobei das Verfahren durch die folgenden Schritten gekennzeichnet ist :
D1) Verdrehen (140) der ersten Warenaufnahmevorrichtung (3.1) gegenüber dem ersten Flurförderfahrzeug (2.1) dergestalt, dass ein dem ersten Auftrag zugewiesener erster Warensektor (7.1) der ersten Warenaufnahmevorrichtung (3.1) dem Kommissionierer (10) zugewandt ist,
E1) Ablegen (150) der zu kommissionierenden ersten Ware (5.1) im ersten Warensektor (7.1) der ersten Warenaufnahmevorrichtung (3.1) durch den Kommissionierer (10),
A2) Bereitstellen (160) der zu kommissionierenden, dem zweiten Auftrag zugeordneten zweiten Ware (5.2) an einer zweiten Übergabeposition (11.2),
B2) Aufnehmen (170) der zu kommissionierenden zweiten Ware (5.2) an der zweiten Übergabeposition (11.2) durch den Kommissionierer (10),
C2) Positionieren (180) des ersten fahrerlosen Flurförderfahrzeugs (2.1) mitsamt des ersten Kommissioniersystems (1.1) in der Nähe des Kommissionierers (10),
D2) Verdrehen (190) der ersten Warenaufnahmevorrichtung (3.1) gegenüber dem ersten Flurförderfahrzeug (2.1) dergestalt, dass ein dem zweiten Auftrag zugewiesener zweiter Warensektor (7.2) der ersten Warenaufnahmevorrichtung (3.1) dem Kommissionierer (10) zugewandt ist, und
E2) Ablegen (200) der zu kommissionierenden zweiten Ware (5.2) im zweiten Warensektor (7.2) der ersten Warenaufnahmevorrichtung (3.1) durch den Kommissionierer (10).

2. Verfahren (100) zum Kommissionieren von unterschiedlichen Aufträgen zugeordneten Waren (5, 5.1, 5.2, 5.3) nach Anspruch 1, wobei das Bereitstellen der zu kommissionierenden Waren (5, 5.1, 5.2, 5.3) an einer Übergabeposition (11.1, 11.2) gemäß Schritt A1 und optional Schritt A2 unter Verwendung eines zweiten Kommissioniersystems (1.2) mit den folgenden Schritten erfolgt, wobei das zweite Kommissioniersystem (1.2) ein zweites fahrerloses Flurförderfahrzeug (2.2) und eine drehbar auf dem zweiten Flurförderfahrzeug (2.2) gelagerte zweite Warenaufnahmevorrichtung (3.2) zum Bereitstellen von Waren (5, 5.1, 5.2, 5.3) in einer Vielzahl von Warensektoren (7, 7.1, 7.2) aufweist:
A11) Bereitstellen (111) der zu kommissionierenden ersten Ware (5.1) in einem ersten Warensektoren (7.1) der zweiten Warenaufnahmevorrichtung (1.2) und definieren dieses ersten Warensektors (7.1) als die erste Übergabeposition (11.1),
A12) Positionieren (112) des zweiten Flurförderfahrzeugs (1.2) in der Nähe des Kommissionierers (10),
A13) Verdrehen (113) der zweiten Warenaufnahmevorrichtung (3.2) gegenüber dem zweiten Flurförderfahrzeug (2.2) dergestalt, dass der erste Warensektor (7.1) der zweiten Warenaufnahmevorrichtung (1.2) dem Kommissionierer (10) zugewandt ist,
und optional anschließend
A21) Bereitstellen (161) der zu kommissionierenden zweiten Ware (5.2) in einem zweiten Warensektoren (7.2) der zweiten Warenaufnahmevorrichtung (3.2) und definieren dieses zweiten Warensektors (7.2) als die zweite Übergabeposition (11.2),
A22) Positionieren (162) des zweiten Flurförderfahrzeugs (1.2) in der Nähe des Kommissionierers (10),
A23) Verdrehen (163) der zweiten Warenaufnahmevorrichtung (3.2) gegenüber dem zweiten Flurförderfahrzeug (1.2) dergestalt, dass der zweite Warensektor (7.2) der zweiten Warenaufnahmevorrichtung (3.2) dem Kommissionierer (10) zugewandt ist.

3. Verfahren (100) zum Kommissionieren von unterschiedlichen Aufträgen zugeordneten Waren nach einem der voranstehenden Ansprüche, wobei
- gemäß Schritt C1 und/oder C2 das Positionieren des ersten fahrerlosen Flurförderfahrzeugs (1.1) in der Nähe des Kommissionierers erfolgt, indem das erste Flurförderfahrzeug (1.1) dem Kommissionierer (10) in einem vorgebbaren ersten Abstand folgt oder indem das erste Flurförderfahrzeug (1.1) in einem ersten Kommissionierbereich positioniert ist, und/oder
- gemäß Schritt A12 und/oder A22 das Positionieren des zweiten Flurförderfahrzeugs (1.2) in der Nähe des Kommissionierers (10) erfolgt, indem das zweite Flurförderfahrzeug (1.2) dem Kommissionierer (10) in einem vorgebbaren zweiten Abstand folgt oder indem das zweite Flurförderfahrzeug (1.2) in einem zweiten Kommissionierbereich positioniert ist.

4. Kommissioniersystem (1, 1.1, 1.2) umfassend ein fahrerloses Flurförderfahrzeug (2, 2.1, 2.2) und eine drehbar auf dem Flurförderfahrzeug gelagerte Warenaufnahmevorrichtung (3, 3.1, 3.2) zur Aufnahme und/oder Bereitstellung von Waren (5, 5.1, 5.2, 5.3) in einer Vielzahl von Warensektoren (7, 7.1, 7.2), wobei
- das Flurförderfahrzeug einen Computer mit einer Prozessoreinheit und einer Speichereinheit umfasst,
- die Prozessoreinheit dazu geeignet ist, Rechenoperationen auszuführen und insbesondere als CPU, GPU oder dergleichen mit einem oder mehreren Prozessorkernen ausgeführt ist, und wobei das Kommissioniersystem **dadurch gekennzeichnet ist , dass**
- die Prozessoreinheit dazu eingerichtet ist, durch Ansteuern von geeigneten Aktuatoren des Flurförderfahrzeugs das Flurförderfahrzeug zu positionieren und die Warenaufnahmevorrichtung gegenüber dem Flurförderfahrzeug zu verdrehen,
- die Speichereinheit dazu geeignet ist, Daten zu speichern und an die Prozessoreinheit auszugeben und insbesondere als flüchtiger oder nichtflüchtiger Speicher ausgebildet ist, und
- das Kommissioniersystem eingerichtet ist zur Verwendung im Verfahren (100) gemäß einem der Ansprüche 1 bis 3.

5. Kommissioniersystem (1) nach Anspruch 4, wobei das Flurförderfahrzeug (2, 2.1, 2.2) einen gegenüber dem Flurförderfahrzeug drehbaren Drehteller (8) aufweist, auf dem die Warenaufnahmevorrichtung (3, 3.1, 3.2) angeordnet ist.

6. Kommissioniersystem (1) nach einem der Anspruch 4 oder 5, wobei die Warenaufnahmevorrichtung (3) eine umlaufende Einhängevorrichtung aufweist, die insbesondere als Kleiderstange (4) ausgeführt ist und das Einhängen von Kleiderbügeln ermöglicht.

7. Kommissioniersystem (1) nach Anspruch 6, wobei die umlaufende Einhängevorrichtung kreisförmig, elliptisch oder vieleckig ausgeführt ist.

8. Kommissioniersystem (1) nach einem der Ansprüche 4 bis 7, wobei die Warenaufnahmevorrichtung (3) ein mehrseitig zugängliches Ablageregal aufweist.

9. Kommissioniersystem (1) nach einem der Ansprüche 4 bis 8, wobei die Warensektoren (7) der Warenaufnahmevorrichtung (3) mittels einer Put-by-light-Vorrichtung und/oder einer Pick-by-light-Vorrichtung jeweils durch ein Lichtsignal markierbar sind.

10. Kommissioniersystem (1) nach einem der Ansprüche 4 bis 9, wobei die Warensektoren (7) der Warenaufnahmevorrichtung (3) durch Warentrenner, insbesondere durch Trennwände (6), voneinander abgetrennt sind.

11. Kommissioniersystem (1) nach einem der Ansprüche 4 bis 10, wobei das Flurförderfahrzeug (2) als ein autonomes Flurförderfahrzeug ausgeführt ist.

12. Computerprogrammprodukt, umfassend Befehle, die bewirken, dass das fahrerlose Flurförderfahrzeug (2) eines Kommissioniersystem (1) gemäß einem der Ansprüche 4 bis 11
- die Verfahrensschritte C1 und D1 und C2 und D2 nach Anspruch 1, und/oder
- die Verfahrensschritte A12 und A13 und optional die Verfahrensschritte A22 und A23 nach Anspruch 2 ausführt.

## Claims

1. Method (100) for picking goods (5, 5.1, 5.2, 5.3) assigned to different orders using a first picking system (1.1) comprising a first automated guided vehicle (2.1) and a first goods receiving device (3.1) rotatably mounted on the first automated guided vehicle (2.1) for receiving goods (5, 5.1, 5.2, 5.3) in order-specific goods sectors (7, 7.1, 7.2) assigned to the different orders, wherein
- a first good (5.1) is assigned to a first order and
- a second good (5.2) is assigned to a second order, with the following steps:
A1) providing (110) the first good (5.1) to be picked, assigned to the first order, at a first transfer position (11.1),
B1) picking up (120) the first good (5.1) to be picked at the first transfer position (11.1) by an order picker (10),
C1) positioning (130) the first automated guided vehicle (2.1) together with the first picking system (1.1) in the vicinity of the order picker (10),
D1) rotating (140) the first goods receiving device (3.1) relative to the first automated guided vehicle (2.1) in such a way that a first goods sector (7.1) of the first goods receiving device (3.1) assigned to the first order faces the order picker (10),
E1) placing (150) the first good (5.1) to be picked in the first goods sector (7.1) of the first goods receiving device (3.1) by the order picker (10),
A2) providing (160) the second good (5.2) to be picked, assigned to the second order, at a second transfer position (11.2),
B2) picking up (170) the second good (5.2) to be picked at the second transfer position (11.2) by the order picker (10),
C2) positioning (180) the first automated guided vehicle (2.1) together with the first order picking system (1.1) in the vicinity of the order picker (10),
D2) rotating (190) the first goods receiving device (3.1) relative to the first automated guided vehicle (2.1) in such a way that a second goods sector (7.2) of the first goods receiving device (3.1) assigned to the second order faces the order picker (10), and
E2) placing (200) the second good (5.2) to be picked in the second goods sector (7.2) of the first goods receiving device (3.1) by the order picker (10).

2. Method (100) for picking goods (5, 5.1, 5.2, 5.3) assigned to different orders according to claim 1, wherein the goods (5, 5.1, 5.2, 5.3) to be picked are provided at a transfer position (11.1, 11.2) according to step A1 and optionally step A2 using a second picking system (1.2), wherein the second picking system (1.2) comprises a second automated guided vehicle (2.2) and a second goods receiving device (3.2) rotatably mounted on the second automated guided vehicle (2.2) for providing goods (5, 5.1, 5.2, 5.3) in a plurality of goods sectors (7, 7.1, 7.2), with the following steps:
A11) providing (111) the first good (5.1) to be picked in a first goods sector (7.1) of the second goods receiving device (1.2) and defining this first goods sector (7.1) as the first transfer position (11.1),
A12) positioning (112) the second automated guided vehicle (1.2) in the vicinity of the order picker (10),
A13) rotating (113) the second goods receiving device (3.2) relative to the second automated guided vehicle (2.2) in such a way that the first goods sector (7.1) of the second goods receiving device (1.2) faces the order picker (10),
and optionally afterwards
A21) providing (161) the second good (5.2) to be picked in a second goods sector (7.2) of the second goods receiving device (3.2) and defining this second goods sector (7.2) as the second transfer position (11.2),
A22) positioning (162) the second automated guided vehicle (1.2) in the vicinity of the order picker (10),
A23) rotating (163) the second goods receiving device (3.2) relative to the second automated guided vehicle (1.2) in such a way that the second goods sector (7.2) of the second goods receiving device (3.2) faces the order picker (10).

3. Method (100) for picking goods assigned to different orders according to one of the preceding claims, wherein
- according to step C1 and/or C2, the first automated guided vehicle (2.1) is positioned in the vicinity of the order picker by the first automated guided vehicle (2.1) following the order picker (10) at a predeterminable first distance or by the first automated guided vehicle (2.1) being positioned in a first order picking area, and/or
- according to step A12 and/or A22, the second automated guided vehicle (2.2) is positioned in the vicinity of the order picker (10) by the second automated guided vehicle (2.2) following the order picker (10) at a predeterminable second distance or by the second automated guided vehicle (2.2) being positioned in a second order picking area.

4. Picking system (1, 1.1, 1.2) comprising an automated guided vehicle (2, 2.1, 2.2) and a goods receiving device (3, 3.1, 3.2) rotatably supported on the automated guided vehicle for receiving and/or providing goods (5, 5.1, 5.2, 5.3) in a plurality of goods sectors (7, 7.1, 7.2), wherein
- the automated guided vehicle comprises a computer with a processor unit and a memory unit,
- the processor unit is adapted to perform computational operations and is in particular implemented as a CPU, GPU or the like with one or more processor cores,
- the processor unit is configured to position the automated guided vehicle and to rotate the goods receiving device relative to the automated guided vehicle by actuating suitable actuators of the automated guided vehicle,
- the memory unit is adapted to store data and to output data to the processor unit and is in particular designed as a volatile or non-volatile memory, and
- the picking system is configured for use in the method (100) according to any one of claims 1 to 3.

5. Picking system (1) according to claim 4, wherein the automated guided vehicle (2, 2.1, 2.2) comprises a turntable (8) which is rotatable relative to the automated guided vehicle and on which the goods receiving device (3, 3.1, 3.2) is arranged.

6. Picking system (1) according to one of claims 4 or 5, wherein the goods receiving device (3) comprises a circumferential hanging device, which is designed in particular as a clothes rail (4) and enables clothes hangers to be hung up.

7. Picking system (1) according to one of claims 4 to 6, wherein the circumferential hanging device is circular, elliptical or polygonal.

8. Picking system (1) according to one of claims 4 to 7, wherein the goods receiving device (3) comprises a storage rack accessible from several sides.

9. Picking system (1) according to one of claims 4 to 8, wherein the goods sectors (7) of the goods receiving device (3) can each be marked by a light signal by means of a put-by-light device and/or a pick-by-light device.

10. Picking system (1) according to one of claims 4 to 9, wherein the goods sectors (7) of the goods receiving device (3) are separated from each other by goods separators, in particular by partitions (6).

11. Picking system (1) according to any one of claims 4 to 10, wherein the automated guided vehicle (2) is designed as an autonomous automated guided vehicle.

12. A computer program comprising instructions that cause the automated guided vehicle (2) of a picking system (1) according to any one of claims 4 to 11 to execute
- the process steps C1 and D1 and C2 and D2 according to claim 1, and/or
- the process steps A12 and A13 and optionally the process steps A22 and A23 according to claim 2.

## Revendications

1. Procédé (100), destiné à préparer des marchandises (5, 5.1, 5.2, 5.3) affectées à différentes commandes, en utilisant un premier système de préparation (1.1) de commandes, comprenant un premier chariot de manutention (2.1) au sol sans conducteur et un premier dispositif de reprise (3.1) de marchandises, monté de manière rotative sur le premier chariot de manutention (2.1) au sol, pour reprendre des marchandises (5, 5.1, 5.2, 5.3) dans les secteurs (7, 7.1, 7.2) de marchandises spécifiques à chaque commande, affectés à différentes commandes,
- une première marchandise (5.1) étant affectée à une première commande et
- une deuxième marchandise (5.2) étant affectée à une deuxième commande,
avec les étapes suivantes, consistant à :
A1) mettre à disposition (110) à une première position de transfert (11.1) la première marchandise (5.1) à préparer, affectée à la première commande,
B1) reprendre (120) la première marchandise (5.1) à préparer à la première position de transfert (11.1) à l'aide d'un préparateur de commandes (10),
Cl) positionner (130) le premier chariot de manutention (2.1) au sol sans conducteur, y compris le premier système de préparation (1.1) de commandes à proximité du préparateur de commandes (10) et le procédé étant **caractérisé par** les étapes suivantes, consistant à :
Dl) faire tourner (140) le premier dispositif de reprise (3.1) de marchandises par rapport au premier chariot de manutention (2.1) au sol, de telle sorte qu'un premier secteur (7.1) de marchandises qui est affecté à la première commande du premier dispositif de reprise (3.1) de marchandises se trouve au vis-à-vis du préparateur de commandes (10),
El) déposer (150) la première marchandise (5.1) à préparer dans le premier secteur (7.1) de marchandises du premier dispositif de reprise (3.1) de marchandises à l'aide du préparateur de commandes (10),
A2) mettre disposition (160) à une deuxième position de transfert (11.2) la deuxième marchandise (5.2) à préparer, affectée à la deuxième commande,
B2) reprendre (170) la deuxième marchandise (5.2) à préparer à la deuxième position de transfert (11.2) à l'aide du préparateur de commandes (10),
C2) positionner (180) le premier chariot de manutention (2.1) au sol sans conducteur, y compris le premier système de préparation (1.1) de commandes à proximité du préparateur de commandes (10),
D2) faire tourner (190) le premier dispositif de reprise (3.1) de marchandises par rapport au premier chariot de manutention (2.1) au sol, de telle sorte qu'un deuxième secteur (7.2) de marchandises qui est affecté à la deuxième commande du dispositif de reprise (3.1) de marchandises se trouve au vis-à-vis du préparateur de commandes (10) et
E2) déposer (200) la deuxième marchandise (5.2) à préparer dans le deuxième secteur (7.2) de marchandises du premier dispositif de reprise (3.1) de marchandises à l'aide du préparateur de commandes (10).

2. Procédé (100), destiné à préparer des marchandises (5, 5.1, 5.2, 5.3) affectées à différentes commandes selon la revendication 1, la mise à disposition des marchandises (5, 5.1, 5.2, 5.3) à préparer à une position de transfert (11.1, 11.2) conformément à l'étape A1 et en option l'étape A2 s'effectuant en utilisant un deuxième système de préparation (1.2) de commandes, le deuxième système de préparation (1.2) de commandes comportant un deuxième chariot de manutention (2.2) au sol sans conducteur et un deuxième dispositif de reprise (3.2) de marchandises, monté de manière rotative sur le deuxième chariot de manutention (2.2) au sol, pour mettre à disposition des marchandises (5, 5.1, 5.2, 5.3) dans une pluralité de secteurs (7, 7.1, 7.2) de marchandises, avec les étapes suivantes, consistant à :
All) mettre à disposition (111) la première marchandise (5.1) à préparer dans un premier secteur (7.1) de marchandises du deuxième dispositif de reprise (1.2) de marchandises et définir ledit premier secteur (7.1) de marchandises comme étant la première position de transfert (11.1),
A12) positionner (112) le deuxième chariot de manutention (1.2) au sol à proximité du préparateur de commandes (10),
A13) faire tourner (113) le deuxième dispositif de reprise (3.2) de marchandises par rapport au deuxième chariot de manutention (2.2) au sol, de telle sorte que le premier secteur (7.1) de marchandises du deuxième dispositif de reprise (1.2) de marchandises se trouve au vis-à-vis du préparateur de commandes (10),
et ensuite, en option,
A21) mettre à disposition (161) la deuxième marchandise (5.2) à préparer dans un deuxième secteur (7.2) de marchandises du deuxième dispositif de reprise (3.2) de marchandises et définir ledit deuxième secteur (7.2) de marchandises comme étant la deuxième position de transfert (11.2),
A22) positionner (162) le deuxième chariot de manutention (1.2) au sol à proximité du préparateur de commandes (10),
A23) faire tourner (163) le deuxième dispositif de reprise (3.2) de marchandises par rapport au deuxième chariot de manutention (1.2) au sol, de telle sorte que le deuxième secteur (7.2) de marchandises du deuxième dispositif de reprise (3.2) de marchandises se trouve au vis-à-vis du préparateur de commandes (10).

3. Procédé (100), destiné à préparer des marchandises à différentes commandes selon l'une quelconque des revendications précédentes,
- conformément à l'étape Cl et / ou C2, le positionnement du premier chariot de manutention (1.1) au sol sans conducteur à proximité du préparateur de commandes s'effectuant en ce que le premier chariot de manutention (1.1) au sol suit le préparateur de commandes (10) avec un premier écart prédéfinissable ou en ce que le premier chariot de manutention (1.1) au sol est positionné dans une première zone de préparation de commandes et / ou
- conformément à l'étape A12 et / ou A22, le positionnement du deuxième chariot de manutention (1.2) au sol à proximité du préparateur de commandes (10) s'effectuant en ce que le deuxième chariot de manutention (1.2) suit le préparateur de commandes (10) avec un premier écart prédéfinissable ou en ce que le deuxième chariot de manutention (1.2) au sol est positionné dans une deuxième zone de préparation de commandes.

4. Système de préparation (1, 1.1, 1.2) de commandes, comprenant un chariot de manutention (2, 2.1, 2.2) au sol sans conducteur et un dispositif de reprise (3, 3.1, 3.2) de marchandises, monté de manière rotative sur le chariot de manutention, pour reprendre et / ou mettre à disposition des marchandises (5, 5.1, 5.2, 5.3) dans une pluralité de secteurs (7, 7.1, 7.2) de marchandises,
- le chariot de manutention au sol comprenant un ordinateur, doté d'une unité de processeur et d'une unité de mémoire,
- l'unité de processeur étant apte à réaliser des opérations de calcul et étant réalisée notamment sous la forme d'un CPU, d'un GPU ou analogue, avec un ou plusieurs cœurs de processeur, le système de préparation de commande étant **caractérisé en ce que**,
- l'unité de processeur est configurée pour, en activant des actionneurs appropriés du chariot de manutention au sol, positionner le chariot de manutention au sol et faire tourner le dispositif de reprise de marchandises par rapport au chariot de manutention au sol,
- l'unité de mémoire est apte à mémoriser des données et à les restituer à l'unité de processeur et est réalisée notamment sous la forme d'une mémoire volatile ou non volatile et
- le système de préparation de commandes est configuré pour être utilisé dans le procédé (100) conformément à l'une quelconque des revendications 1 à 3.

5. Système de préparation (1) de commandes selon la revendication 4, le chariot de manutention (2, 2.1, 2.2) au sol comportant un plateau tournant (8) rotatif par rapport au chariot de manutention au sol, sur lequel est placé le dispositif de reprise (3, 3.1, 3.2) de marchandises.

6. Système de préparation (1) de commandes selon l'une quelconque des revendications 4 ou 5, le dispositif de reprise (3) de marchandises comportant un dispositif d'accrochage périphérique, qui est réalisé notamment sous la forme d'une tringle à vêtements (4) et permet l'accrochage de cintres.

7. Système de préparation (1) de commandes selon la revendication 6, le dispositif d'accrochage périphérique étant réalisé sous forme circulaire, elliptique ou polygonale.

8. Système de préparation (1) de commandes selon l'une quelconque des revendications 4 à 7, le dispositif de reprise (3) de marchandises comportant un rayonnage de stockage accessible par plusieurs côtés.

9. Système de préparation (1) de commandes selon l'une quelconque des revendications 4 à 8, les secteurs (7) de marchandises du dispositif de reprise (3) de marchandises étant susceptibles d'être marqués respectivement par un signal lumineux, au moyen d'un dispositif Put-by-Light et / ou d'un dispositif Pick-by-Light.

10. Système de préparation (1) de commandes selon l'une quelconque des revendications 4 à 9, les secteurs (7) de marchandises du dispositif de reprise (3) de marchandises étant séparés les unes des autres par des séparateurs de marchandises, notamment par des parois de séparation (6).

11. Système de préparation (1) de commandes selon l'une quelconque des revendications 4 à 10, le chariot de manutention (2) au sol étant réalisé sous la forme d'un chariot de manutention au sol autonome.

12. Produit de programme informatique, comprenant des instructions ayant pour effet que le chariot de manutention (2) au sol sans conducteur d'un système de préparation (1) de commandes conforme à l'une des revendications 4 à 11
- réalise les étapes de procédé Cl et Dl et C2 et D2 selon la revendication 1, et / ou
- les étapes de procédé A12 et A13 et en option, les étapes de procédé A22 et A23 selon la revendication 2.
